# EUROPÄISCHE PATENTANMELDUNG

(11) **EP 4 109 031 A1**
(43) Veröffentlichungstag der Anmeldung: **28.12.2022**
(21) Anmeldenummer: 22173801.6
(22) Anmeldetag: 17.05.2022
(51) Int. Cl.: F41A 35/00, F41G 1/00

(54) **FLEXIBLE BLENDE FÜR OPTISCHE VORRICHTUNGEN UND EINE OPTISCHE VORRICHTUNG HIERMIT**

(30) Priorität: 21.06.2021 DE 102021115995
(71) Anmelder: SCHMIDT & BENDER GmbH & Co. KG, 35444 Biebertal (DE)
(72) Erfinder: HOLZMANN, Michael, 35510 Butzbach (DE); HENNEMANN, Jörg, 35444 Biebertal (DE); HÖLLER, Jonas, 35423 Lich (DE); OTTE, Antonia, 35415 Pohlheim (DE)
(74) Vertreter: Patentanwälte Olbricht Buchhold Keulertz

(57) **Zusammenfassung**

Die Erfindung betrifft eine flexible Blende (1) für optische Vorrichtungen (50), mit einem flexiblen Flächenelement (2), das in einem ersten Zustand (Z1) eine flache, ebene Form einnimmt, und in einem zweiten Zustand (Z2) zu einer hohlen Rolle (3) gerollt oder gewickelt ist, mit wenigstens zwei Spannzügen (10, 11, 12), die im zweiten Zustand (Z2) um die hohle Rolle (3) herumgeführt sind und die hohle Rolle (3) in der gerollten oder gewickelten Form halten. Außerdem betrifft die Erfindung eine optische Vorrichtung aufweisend einen Rohrkörper (51) enthaltend eine Optik (52) und mit einem ersten offenen Rohrende (53), ein Vorsatzgerät (60) mit einem Gerätegehäuse (61), wobei ein optischer Durchgang (62) des Gerätegehäuses (61) vor dem offenen Rohrende (53) angeordnet ist, und eine solche flexible Blende (1) im zweiten Zustand (Z2), die um das offene Rohrende (53) des Rohrkörpers (51) und den optischen Durchgang (62) des Gerätegehäuses (61) gerollt oder gewickelt ist, mit den Spannzügen (10, 11, 12) in der Form einer Röhre gehalten ist, und so einen optischen Tunnel (70) zwischen dem offenen Rohrende (53) und dem optischen Durchgang (62) ausbildet.

## Beschreibung

Die Erfindung betrifft eine flexible Blende gemäß Anspruch 1 und eine optische Vorrichtung hiermit nach Anspruch 15.

Aus dem Stand der Technik sind verschiedene optische Blenden bekannt, mit denen Lichteinfall in optische Vorrichtungen verringert oder unterbunden wird, oder aber auch umgekehrt einen Lichtaustritt verhindern. Insbesondere bei Zielfernrohren kommen vermehrt Vorsatzgeräte zum Einsatz, die entweder die optische Strahlung digitalisieren, aufbereiten oder Informationen, Daten oder Grafiken in den Strahlengang einspeisen. So kann beispielsweise eine zweite Person auf einem Bildschirm mitverfolgen was der Schütze durch das Zielfernrohr wahrnimmt, optische Strahlung durch Nachtsichttechnik überhaupt erst sichtbar gemacht werden oder aber Zielmarken und Schussinformationen wie Wind, Schussdistanz und Projektildaten und die Einstellung der Verstellräder und- türme des Zielfernohrs angezeigt werden.

Als problematisch erweist es sich dabei, dass Zielfernrohr und Vorsatzgerät über keine standardisierte Schnittstelle verfügen. Beispielsweise existieren riesige Bandbreiten an Durchmessern der Zielfernrohrgehäuse, insbesondere im Bereich von deren Objektiv und Okular. Andererseits werden die Vorsatzgeräte oftmals von anderen Anbietern hergestellt als die Zielfernrohre, sodass die Abstimmung erschwert ist. Aufgrund der mangelhaften Schnittstelle kann Licht in den Zwischenraum zwischen Zielfernrohr und Vorsatzgerät eindringen, wodurch die Bildqualität bis zu gänzlicher Unkenntlichkeit leidet. Andererseits kann auch Licht, insbesondere des Vorsatzgerätes, aus der Schnittstelle austreten. Sensible Tiere werden hierdurch aufgescheucht und der Schütze möglicherweise entdeckt.

Daher behilft man sich mit Blenden, die aus teuren Formteilen aus Gummi hergestellt sind, die einen Dichtungsring zwischen Zielfernrohr und Vorsatzgerät ausbilden. Aufgrund der geringen Stückzahlen für die jeweiligen Zielfernrohr-/Vorsatzgeräteschnittstellen sind die Kosten der Formteile aufgrund des teuren Werkzeugbaus und teurer Rüstzeiten hoch.

Aufgabe der Erfindung ist es deshalb, eine Blende bereitzustellen, die für eine Vielzahl unterschiedlicher Schnittstellen zwischen Zielfernrohr und Vorsatzgerät geeignet ist und kostengünstig herstellbar ist.

Hauptmerkmale der Erfindung sind in den Ansprüchen 1 und 15 angegeben. Ausgestaltungen sind Gegenstand der Ansprüche 2 bis 14 und 16 bis 18.

Die Erfindung betrifft eine flexible Blende für optische Vorrichtungen, mit einem flexiblen Flächenelement, das in einem ersten Zustand eine flache und ebene Form einnimmt, und in einem zweiten Zustand zu einer hohlen Rolle gerollt oder gewickelt ist, mit wenigstens zwei Spannzügen, die im zweiten Zustand um die hohle Rolle herumgeführt sind und die hohle Rolle in der gerollten oder gewickelten Form halten.

Durch das flexible Flächenelement kann die Blende beispielsweise auf verschiedene Objektivdurchmesser von Zielfernrohren und Durchmessern des Anschlussstückes eines Vorsatzgerätes angepasst werden. Die Rolle kann zylindrisch oder kegelstumpfförmig gerollt oder gewickelt sein. Die Enden der Rolle passen sich so einfach an den Durchmesser des Zielfernrohrs und des Vorsatzgerätes an. Mit den Spannzügen kann dann die Blende am Zielfernrohr und Vorsatzgerät befestigt werden. So wird verhindert, dass störendes Licht zwischen Zielfernohr und Vorsatzgerät gelangt. Ebenso kann auch z.B. kein Licht von dem Display des Vorsatzgerätes zwischen dem Gerät und dem Zielfernohr nach außentreten. Bevorzugt besteht die Blende aus einem Material, welches Thermal, insbesondere im Infrarotbereich von 780 Nanometern bis 1°Millimeter, nicht zu detektierbar ist. Dazu sollte sie eine geringe Wärmespeicherkapazität aufweisen. Außerdem kommen hierzu zum Beispiel besondere Arten von Gewebemischungen in Betracht.

Gemäß einer optionalen Ausgestaltung sind die Spannzüge im zweiten Zustand jeweils durch wenigstens zwei Zugtunnel geführt, die auf dem Flächenelement angeordnet oder ausgebildet sind. Hierdurch können die Spannzüge nicht verrutschen und halten entsprechend sicher den Zug aufrecht und die Rolle in Form.

Vorteilhafterweise können die Zugtunnel von aufgenähten Laschen oder Gurten ausgebildet sein. Dies ist einfach in der Herstellung, robust und ermöglicht ein einfaches Durchfädeln der Spannzüge. Außerdem wird ein Verrutschen der Spannzüge auf dem Flächenelement wirksam verhindert.

Bei einer bevorzugten Ausgestaltung sind die Spannzüge im zweiten Zustand mit jeweils einem Spannelement oder einer Klemme gesichert. Dies erlaubt ein einfaches Spannen und auch nachziehen bei Bedarf. Optional können Enden der Spannzüge verknotet werden, damit diese nicht ungewollt durch das Spannelement oder die Klemme rutscht. Optionale Endhülsen auf den Spannzügen, z.B. aus Schlauchmaterial, erlauben ein einfaches einfädeln und verhindern ein Zerfransen.

In einer speziellen Variante sind Spannelemente oder die Klemmen jeweils am flexiblen Flächenelement, bevorzugt an dessen Umfang, festgelegt. Hierdurch haben die Spannzüge zumindest eine definierte Position, die Spannelemente oder die Klemmen gehen nicht verloren und das Handling ist einfacher.

In einer vorteilhaften Ausgestaltung ist vorgesehen, dass wenigstens einer der Spannzüge im Bereich eines ersten Endes der hohlen Rolle und ein weiterer der Spannzüge im Bereich eines zweiten Endes der hohlen Rolle um die hohle Rolle herumgeführt. Hierdurch kann der jeweilige Spannzug fest auf der Rolle gespannt werden, denn hier ist die Rolle im Montagezustand von einem Rohrkörper oder einem Vorsatzgerät von innen gestützt. Letztere werden dadurch eng umschlossen und es gelangt kein Licht mehr in den Zwischenraum zwischen bspw. Zielfernrohr und Vorsatzgerät.

Bevorzugter Weise wird vorgeschlagen, dass die Spannzüge Gummiseile sind. Solche üben eine kontinuierliche Spannkraft auf und halten die Blende sicher in der gewünschten Position.

Im Speziellen kann das flexible Flächenelement wenigstens eine erste Lage aus textilem Stoff aufweisen. Stoff ist robust, kann nicht glänzend ausgebildet sein und ist thermal schwer detektierbar.

Optional kann das flexible Flächenelement wenigstens eine zweite Lage aus textilem Stoff aufweisen. Durch eine zweite Lage wird die Lichtdurchlässigkeit reduziert und es können Ober- und Unterseite der Blende einfacher funktional gestaltet werden, bspw. mit unterschiedlichen Tarnmustern und Oberflächenstrukturen.

Weiter optional kann das flexible Flächenelement wenigstens eine Stabilisierungslage aus einem biegsamen Plattenmaterial oder Folienmaterial aufweisen. Dieses verleiht der Blende eine höhere Steifigkeit und verhindert beispielsweise, dass andere Teile der Blende in den Zwischenraum zwischen einem Rohrkörper und einem Vorsatzgerät ragen, zum Beispiel durchhängender oder "zusammengezurrter" textiler Stoff. Bei der Stabilisierungslage kann es sich um ein flexibles Kunststoffelement handeln.

Optional ist die Stabilisierungslage zwischen der ersten und zweiten Lage angeordnet. Damit kann die Stabilisierungslage ohne Rücksicht auf beispielsweise Farbe und Glanz hinsichtlich seiner Steifigkeit und Lichtundurchlässigkeit ausgelegt werden. Bevorzugt ist die Stabilisierungslage zwischen der ersten und zweiten Lage eingenäht. Weiter bevorzugt besteht auch über der Fläche eine Verbindung zwischen der Stabilisierungslage und der ersten und/oder der zweiten Lage. Damit kann vor allem die innere Lage nicht von der Stabilisierungslage weghängen. Es eignet sich als Verbindung ein Vernähen oder ein Kaschieren bzw. Kleben. Damit wird auch ein Wandern der ersten und zweiten Lage um Stabilisierungslage herum verhindert.

Des Weiteren ist vorteilhafter Weise vorgesehen, dass eine Oberseite und eine Unterseite des flexiblen Flächenelements gleichartig ausgestattet sind, um wahlweise die Oberseite oder die Unterseite als Außenseite der hohlen Rolle zu nutzen. Durch Wenden lässt sich hierdurch beispielsweise ein Farbwechsel der Blende vollziehen. Bevorzugt sind dann Zugtunnel auf Oberseite und Unterseite vorgesehen, die insbesondere durch aufgenähte Laschen oder Gurte ausgebildet sein können.

Im Speziellen weisen die Oberseite und die Unterseite abweichende Tarnmuster und/oder Oberflächenstrukturen auf. Die Blende kann so beidseitig genutzt werden, bspw. bei Tag und bei Nacht oder im Sommer und im Winter. Bsp. zum einen grün-brauner Flecktarn auf der einen Seite, und zum anderen weiß/grau/schwarzer-Schneetran auf der anderen Seite.

Bevorzugt ist das flexible Flächenelement lichtundurchlässig. Damit wird ein Eintritt und Austritt von Licht wirksam unterbunden.

Die Erfindung betrifft außerdem eine optische Vorrichtung aufweisend einen Rohrkörper enthaltend eine Optik und mit einem ersten offenen Rohrende, ein Vorsatzgerät mit einem Gerätegehäuse, wobei ein optischer Durchgang des Gerätegehäuses vor dem offenen Rohrende angeordnet ist, und eine flexible Blende im zweiten Zustand, wie sie vor- und nachstehend beschrieben ist. Dabei ist die flexible Blende um das offene Rohrende des Rohrkörpers und den optischen Durchgang des Gerätegehäuses gerollt oder gewickelt, mit den Spannzügen in der Form einer Röhre gehalten, und bildet so einen optischen Tunnel zwischen dem offenen Rohrende des Rohrkörpers und dem optischen Durchgang des Gerätegehäuses aus. Mit der erfindungsgemäßen Blende wird so der Zwischenraum zwischen Rohrende und optischen Durchgang gut vor Licht abgeschirmt. Auch Schmutz wird an einem Eindringen gehindert. Zu einem gewissen Grad können dabei auch unterschiedlich große Abstände zwischen dem offenen Rohrende des Rohrkörpers und dem optischen Durchgang des Gerätegehäuses mit der Blende überbrückt werden, indem diese unterschiedlich tief in der hohlen Rolle angeordnet sind. In einer besonderen Ausführungsform ist das Flächenelement rechteckig. Optional kann es dann unterschiedlich lange Außenkanten aufweisen. Durch Drehung um 90 Grad lässt sich die Blende dann in zwei Richtungen rollen und es resultieren zwei unterschiedliche Längen der hohlen Rolle für unterschiedliche Abstände zwischen dem offenen Rohrende des Rohrkörpers und dem optischen Durchgang des Gerätegehäuses.

Optional ist vorgesehen, dass der Rohrkörper Teil eines Zielvorrichtungsgehäuses, insbesondere eines Zielfernrohrgehäuses oder eines Reflexvisiergehäuses, ist. Damit kann die Blende dazu genutzt werden, die äußerst sensibel zu handhabenden Zielfernohre effektiv zu nutzen, ohne dass teure Formteile aus Gummi erforderlich wären. Gemäß einer näheren Ausgestaltung bildet das erste offene Rohrende ein Okulargehäuse oder ein Objektivgehäuse aus.

Fernerhin ist in einer speziellen Ausführungsform vorgesehen, dass das Vorsatzgerät eine Optoelektronik enthält, mit der optische Strahlen aus der Optik visualisiert oder digital verarbeitet werden oder Daten, Informationen oder Grafiken optisch in den Strahlengang eingespeist werden. Derartige Geräte können damit temporär oder optional mit dem Zielfernrohr kombiniert werden und die Optoelektronik unterstützt oder überwacht bspw. den Schützen. So kann die Optoelektronik bspw. ein Display, Optikfasern, Leuchtmittel, Restlichtverstärker oder eine Einspiegelungsvorrichtung aufweisen

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine optische Vorrichtung mit einer flexiblen Blende;
- Fig. 2a: eine Draufsicht auf eine flexible Blende in einem ersten Zustand;
- Fig. 2b: einen Längsschnitt durch die Blende nach Fig. 2a;
- Fig. 3a: eine Seitenansicht der optischen Vorrichtung nach Fig. 1;
- Fig. 3b: einen Längsschnitt durch die optische Vorrichtung nach Fig. 3a;
- Fig. 4a: eine Seitenansicht einer weiteren optischen Vorrichtung;
- Fig. 4b: einen Längsschnitt durch die optische Vorrichtung nach Fig. 4a;
- Fig. 5a: eine Schemaskizze einer flexiblen Blende im ersten Zustand; und
- Fig. 5b: eine Schemaskizze der flexiblen Blende nach Fig. 5a im zweiten Zustand.

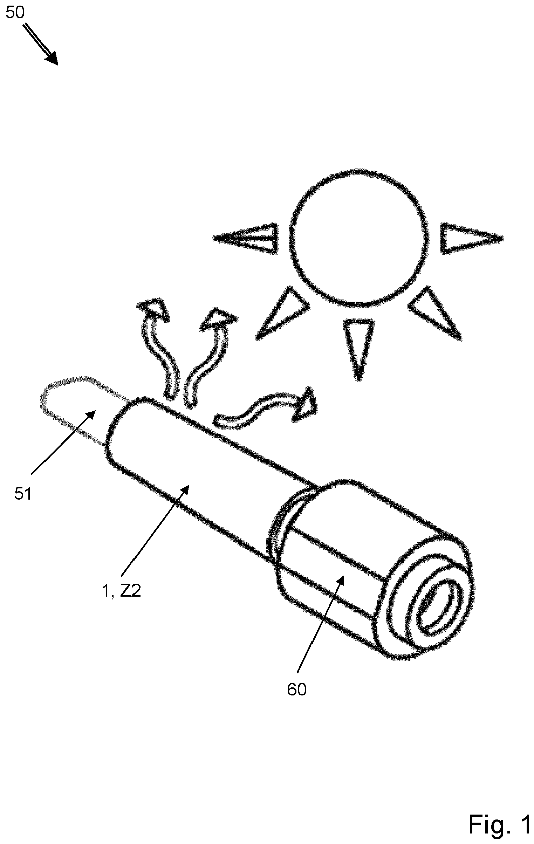

Fig. 1 zeigt eine optische Vorrichtung 50 mit einer flexiblen Blende1. Die flexible Blende 1 sitzt dabei zwischen einem Rohrkörper 51 und einem Vorsatzgerät 60. Die Blende ist zu einer hohlen Rolle 3 gerollt bzw. gewickelt und bildet so einen optischen Tunnel zwischen dem Rohrkörper 51 und dem Vorsatzgerät 60 aus.

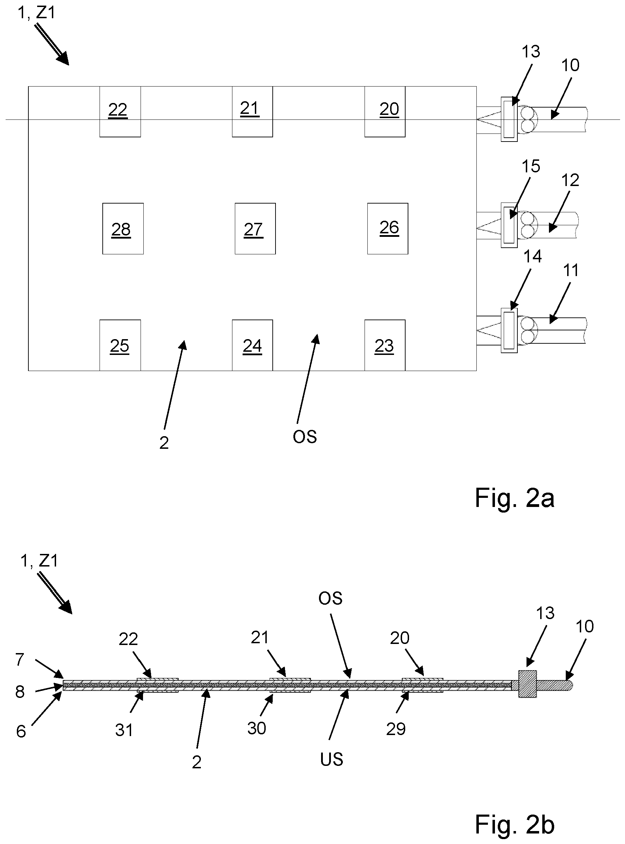

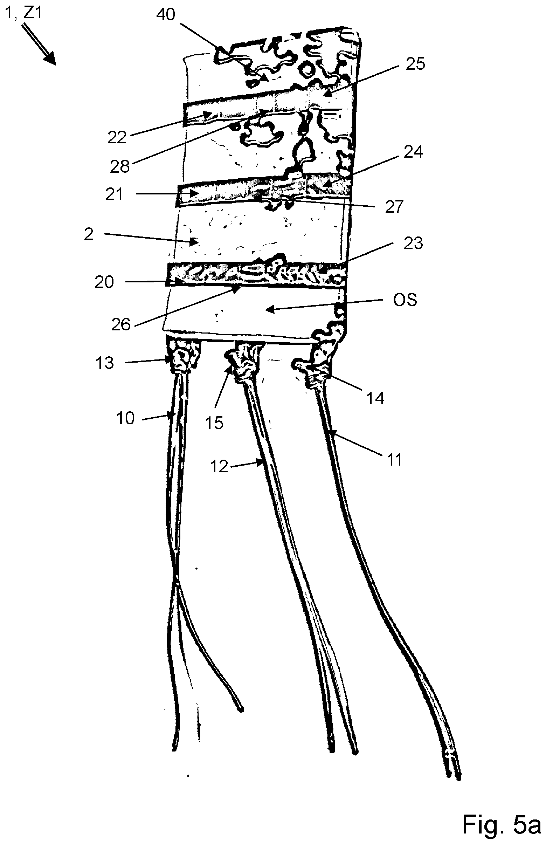

Zunächst wird eine mögliche nähere Ausgestaltung einer solchen flexiblen Blende 1 anhand der **Fig. 2a und 2b** beschrieben. Die **flexible Blende** 1 für eine optische Vorrichtungen 50 gemäß Fig. 1 besteht zumindest im Wesentlichen aus einem flexiblen Flächenelement 2, das in einem ersten Zustand Z1 eine flache und ebene Form einnimmt, und in einem zweiten Zustand Z2 zu einer hohlen Rolle 3 gerollt oder gewickelt ist, und wenigstens zwei Spannzügen 10, 11, 12. Hier sind es insbesondere drei solcher Spannzüge 10, 11, 12 aus Gummiseilen, die im zweiten Zustand Z2 um die hohle Rolle 3 herumgeführt werden und die hohle Rolle 3 dann in der gerollten oder gewickelten Form halten. Gezeigt ist in den Fig. 1, 3a, 3b, 4a, 4b und 5b jeweils der zweite Zustand Z2 und in den Fig. 2a, 2b und 5a der erste Zustand Z1.

Gemäß den **Fig. 2a und 2b** sind auf einer Oberseite OS des Flächenelements 2 wenigstens zwei Zugtunnel, hier insbesondere exakt drei Zugtunnel 20, 21, 22, 23, 24, 25, 26, 27, 28 pro Spannzug 10, 11, 12 angeordnet. Diese Zugtunnel 20, 21, 22, 23, 24, 25, 26, 27, 28 sind jeweils von aufgenähten Laschen ausgebildet. An einer Längsseite des Flächenelements 2 ist jeweils eine Klemme 13, 14, 15 pro Spannzug 11, 12, 13 festgelegt.

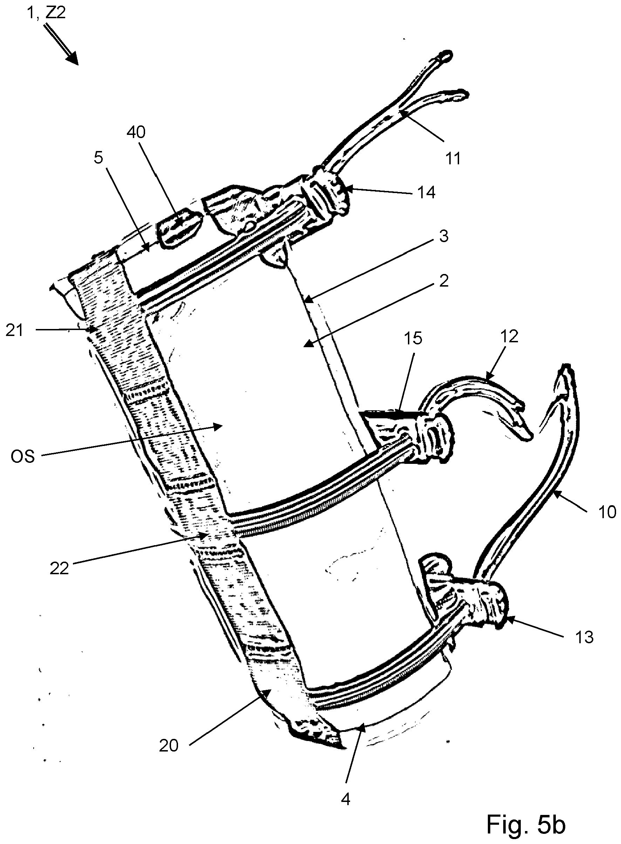

Das Flächenelement 2 ist lichtundurchlässig und weist, wie aus Fig. 5b hervorgeht, drei Lagen auf, nämlich eine erste Lage 6 aus textilem Stoff, eine zweite Lage 7 aus textilem Stoff und eine Stabilisierungslage 8 zwischen der ersten und zweiten Lage 6, 7 aus einem biegsamen Plattenmaterial oder Folienmaterial. Bei der Stabilisierungslage 8 kann es sich insbesondere um ein flexibles Plastik- bzw. Kunststoffelement bzw. -einsatz handeln.

Wie man weiterhin in Fig. 2b erkennt, kann eine Unterseite US gleichartig zur Oberseite OS des flexiblen Flächenelements 2 ausgestattet sein, um wahlweise die Oberseite OS oder die Unterseite US als Außenseite der hohlen Rolle 3 zu nutzen. Hierzu sind auch auf der Unterseite US Zugtunnel In Form von Laschen oder Gurten angeordnet. Bevorzugt weisen die Oberseite OS und die Unterseite US abweichende Tarnmuster 40 und/oder Oberflächenstrukturen auf, insbesondere, um eine Tarnung in unterschiedlichen Umgebungen zu optimieren.

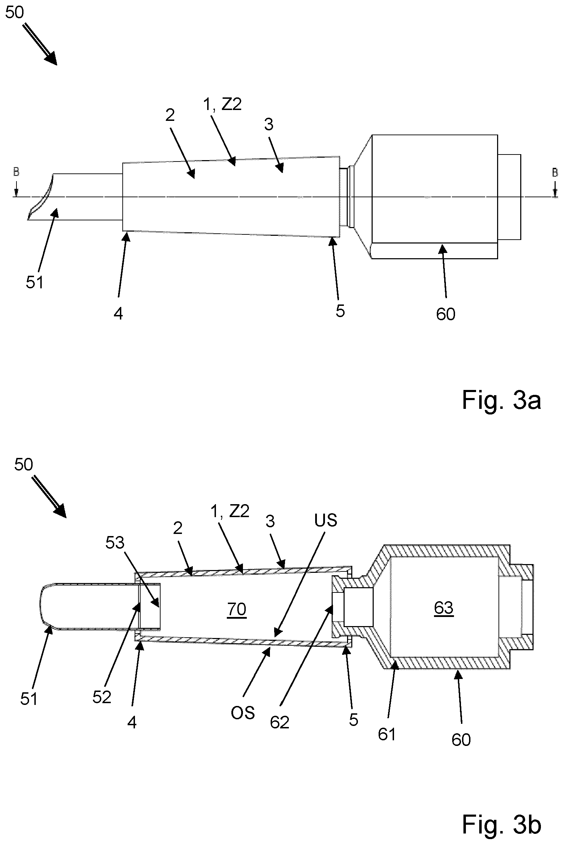

Eine solche flexible Blende 1 gemäß den Fig. 2a und 2b kann durch Rollen bzw. Wickeln in den zweiten Zustand Z2 gebracht werden, wie er in den Fig. 1, 3a, 3b, 4a, 4b, 5b dargestellt ist. Dabei zeigt Fig. 3a eine Seitenansicht der optischen Vorrichtung nach Fig. 1 und Fig. 3b einen Längsschnitt durch die optische Vorrichtung nach Fig. 3a.

Dazu werden die Spannzüge 10, 11, 12 jeweils durch wenigstens zwei der Zugtunnel 20, 21, 22, 23, 24, 25, 26, 27, 28 und um die Rolle 3 herum geführt. Mit dem ersten Ende sind die Spannzüge 10, 11, 12 jeweils im Bereich der Klemmen 13, 14, 15 festgelegt und mit dem zweiten Ende werden sie mit den Klemme 13, 14, 15 gesichert und auf Spannung gehalten. Wie man anhand der Positionierung der Zugtunnel 20, 21, 22, 23, 24, 25, 26, 27, 28 in Fig. 2a erkennt, ist dann wenigstens einer der Spannzüge 10 im Bereich eines ersten Endes 4 der hohlen Rolle 3 und ein weiterer der Spannzüge 11 im Bereich eines zweiten Endes 5 der hohlen Rolle 3 um die hohle Rolle 3 herumgeführt. Der dritte Spannzug 13 ist mittig zwischen den Enden 4, 5 angeordnet.

Gemäß den **Fig. 3a, 3b** weist die optische Vorrichtung 50 einen Rohrkörper 51 enthaltend eine Optik 52 und mit einem ersten offenen Rohrende 53 auf. Zusätzlich weist die optische Vorrichtung 50 ein Vorsatzgerät 60 mit einem Gerätegehäuse 61 mit einem optischen Durchgang 62 auf, in dem eine Optoelektronik 63 angeordnet ist. Die flexible Blende 1 ist in den zweiten Zustand Z2 gebracht, wobei die flexible Blende 1 um das offene Rohrende 53 des Rohrkörpers 51 und den optischen Durchgang 62 des Gerätegehäuses 61 gerollt oder gewickelt ist. Dabei ist das Flächenelement 2, mit den Spannzügen 10, 11, 12 in der Form einer Röhre gehalten und bildet auf diese Weise einen optischen Tunnel 70 zwischen dem offenen Rohrende 53 des Rohrkörpers 51 und dem optischen Durchgang 62 des Gerätegehäuses 61 aus. Der Rohrkörper 51 ist Teil eines Zielfernrohrgehäuses und das erste offene Rohrende 53 bildet ein Okulargehäuse oder ein Objektivgehäuse aus.

Mit der Optoelektronik 63 lassen sich beispielhaft optische Strahlen aus der Optik 52 visualisiert oder digital verarbeiten, Daten, Informationen oder Grafiken optisch in den Strahlengang einspeisen oder Nachtsichttechnik zum Einsatz kommen.

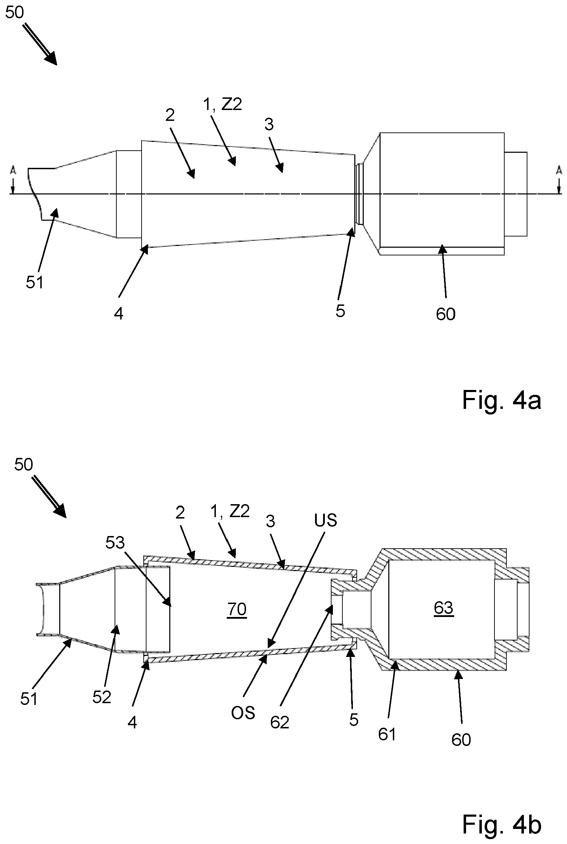

Die optische Vorrichtung 50 nach den **Fig. 4a, 4b** unterscheidet sich nur dadurch von derjenigen nach den Fig. 3a, 3b, dass bei letzteren das Rohrende 53 einen Außendurchmesser aufweist, der geringfügig kleiner ist als der Durchmesser des Gerätegehäuses 61 im Bereich des optischen Durchgangs 62. Daraus resultiert eine kegelstumpfförmige hohle Rolle 3 des Flächenelements 2, die sich vom Vorsatzgerät 60 in Richtung Rohrkörper 51 leicht verjüngt. Dahingegen ist der Durchmesser des Rohrkörpers 51 im Bereich des ersten Rohrendes 53 deutlich größer als der Durchmesser des Gerätegehäuses 61 im Bereich des optischen Durchgangs 62. Auch hieraus resultiert eine kegelstumpfförmige hohle Rolle 3 des Flächenelements 2, die sich allerdings deutlich vom Vorsatzgerät 60 in Richtung Rohrkörper 51 aufweitet.

Die **Fig. 5a** **und** **5b** zeigen nochmal in perspektivischen Ansichten eine flexible Blende 1 im ersten und zweiten Zustand Z1, Z2. Die Bezugsziffern und Erläuterungen zu den Fig. 2a, 2b treffen auch hier zu, weswegen im Wesentlichen auf diesen Beschreibungsteil verwiesen wird. Abweichend zur Ausgestaltung der Fig. 2a, 2b sind die Zugtunnel 20, 21, 22, 23, 24, 25, 26, 27, 28 gemäß den **Fig. 5a****,** **5b** durch Gurte ausgebildet, die abschnittsweise auf dem Flächenelement 2 festgelegt sind und so jeweils mehrere der Zugtunnel 20, 21, 22, 23, 24, 25, 26, 27, 28 ausbilden.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | flexible Blende | 29 | Zugtunnel |
| 2 | flexibles Flächenelement | 30 | Zugtunnel |
| 3 | hohle Rolle | 31 | Zugtunnel |
| 4 | erstes Ende | | |
| 5 | zweites Endes | 40 | Tarnmuster |
| 6 | erste Lage | | |
| 7 | zweite Lage | 50 | optische Vorrichtung |
| 8 | Stabilisierungslage | 51 | Rohrkörper |
| | | 52 | Optik |
| 10 | Spannzug | 53 | erstes offenes Rohrende |
| 11 | Spannzug | | |
| 12 | Spannzug | 60 | Vorsatzgerät |
| 13 | Klemme | 61 | Gerätegehäuse |
| 14 | Klemme | 62 | optischer Durchgang |
| 15 | Klemme | 63 | Optoelektronik |
| 20 | Zugtunnel | 70 | optischer Tunnel |
| 21 | Zugtunnel | | |
| 22 | Zugtunnel | OS | Oberseite |
| 23 | Zugtunnel | US | Unterseite |
| 24 | Zugtunnel | Z1 | erster Zustand |
| 25 | Zugtunnel | Z2 | zweiter Zustand |
| 26 | Zugtunnel | | |
| 27 | Zugtunnel | | |
| 28 | Zugtunnel | | |

## Patentansprüche

1. **Flexible Blende** (1) für optische Vorrichtungen (50), mit einem flexiblen Flächenelement (2), das in einem ersten Zustand (Z1) eine flache und ebene Form einnimmt, und in einem zweiten Zustand (Z2) zu einer hohlen Rolle (3) gerollt oder gewickelt ist, mit wenigstens zwei Spannzügen (10, 11, 12), die im zweiten Zustand (Z2) um die hohle Rolle (3) herumgeführt sind und die hohle Rolle (3) in der gerollten oder gewickelten Form halten.

2. Flexible Blende (1) gemäß Anspruch 1, **dadurch gekennzeichnet, dass** die Spannzüge (10, 11, 12) im zweiten Zustand (Z2) jeweils durch wenigstens zwei Zugtunnel (20, 21, 22, 23, 24, 25, 26, 27, 28) geführt sind, die auf dem Flächenelement (2) angeordnet oder ausgebildet sind.

3. Flexible Blende (1) gemäß einem der Ansprüche 1 oder 2, **dadurch gekennzeichnet, dass** die Zugtunnel (20, 21, 22, 23, 24, 25, 26, 27, 28) von aufgenähten Laschen oder Gurten ausgebildet sind.

4. Flexible Blende (1) gemäß einem der vorhergehenden Ansprüche, **dadurch gekennzeichnet, dass** die Spannzüge (10, 11, 12) im zweiten Zustand (Z2) mit jeweils einem Spannelement oder einer Klemme (13, 14, 15) gesichert sind.

5. Flexible Blende (1) gemäß Anspruch 4, **dadurch gekennzeichnet, dass** die Spannelemente oder die Klemmen (13, 14, 15) jeweils am flexiblen Flächenelement (2), bevorzugt an dessen Umfang, festgelegt sind.

6. Flexible Blende (1) gemäß einem der vorhergehenden Ansprüche, **dadurch gekennzeichnet, dass** wenigstens einer der Spannzüge (10, 11, 12) im Bereich eines ersten Endes (4) der hohlen Rolle (3) und ein weiterer der Spannzüge (10, 11, 12) im Bereich eines zweiten Endes (5) der hohlen Rolle (3) um die hohle Rolle (3) herumgeführt.

7. Flexible Blende (1) gemäß einem der vorhergehenden Ansprüche, **dadurch gekennzeichnet, dass** die Spannzüge (10, 11, 12) Gummiseile sind.

8. Flexible Blende (1) gemäß einem der vorhergehenden Ansprüche, **dadurch gekennzeichnet, dass** das flexible Flächenelement (2) wenigstens eine erste Lage (6) aus textilem Stoff aufweist.

9. Flexible Blende (1) gemäß Anspruch 8, **dadurch gekennzeichnet, dass** das flexible Flächenelement (2) wenigstens eine zweite Lage (7) aus textilem Stoff aufweist.

10. Flexible Blende (1) gemäß einem der vorhergehenden Ansprüche, **dadurch gekennzeichnet, dass** das flexible Flächenelement (2) wenigstens eine Stabilisierungslage (8) aus einem biegsamen Plattenmaterial oder Folienmaterial aufweist.

11. Flexible Blende (1) gemäß den Ansprüche 8, 9 und 10, **dadurch gekennzeichnet, dass** die Stabilisierungslage (8) zwischen der ersten und zweiten Lage (6, 7) angeordnet ist.

12. Flexible Blende (1) gemäß einem der vorhergehenden Ansprüche, **dadurch gekennzeichnet, dass** eine Oberseite (OS) und eine Unterseite (US) des flexiblen Flächenelements (2) gleichartig ausgestattet sind, um wahlweise die Oberseite (OS) oder die Unterseite (US) als Außenseite der hohlen Rolle (3) zu nutzen.

13. Flexible Blende (1) gemäß einem der vorhergehenden Ansprüche, **dadurch gekennzeichnet, dass** die Oberseite (OS) und die Unterseite (US) abweichende Tarnmuster (40) und/oder Oberflächenstrukturen aufweisen.

14. Flexible Blende (1) gemäß einem der vorhergehenden Ansprüche, **dadurch gekennzeichnet, dass** das flexible Flächenelement (2) lichtundurchlässig ist.

15. **Optische Vorrichtung** (50) aufweisend
- einen Rohrkörper (51) enthaltend eine Optik (52) und mit einem ersten offenen Rohrende (53),
- ein Vorsatzgerät (60) mit einem Gerätegehäuse (61), wobei ein optischer Durchgang (62) des Gerätegehäuses (61) vor dem offenen Rohrende (53) angeordnet ist, und
- eine flexible Blende (1) nach einem der vorhergehenden Ansprüche im zweiten Zustand (Z2), wobei die flexible Blende (1) um das offene Rohrende (53) des Rohrkörpers (51) und den optischen Durchgang (62) des Gerätegehäuses (61) gerollt oder gewickelt ist, mit den Spannzügen (10, 11, 12) in der Form einer Röhre gehalten ist, und so einen optischen Tunnel (70) zwischen dem offenen Rohrende (53) des Rohrkörpers (51) und dem optischen Durchgang (62) des Gerätegehäuses (61) ausbildet.

16. Optische Vorrichtung (50) gemäß Anspruch 15, **dadurch gekennzeichnet, dass** der Rohrkörper (51) Teil eines Zielvorrichtungsgehäuses, insbesondere eines Zielfernrohrgehäuses oder eines Reflexvisiergehäuses ist.

17. Optische Vorrichtung (50) gemäß einem der Ansprüche 15 oder 16, **dadurch gekennzeichnet, dass** das erste offene Rohrende (53) ein Okulargehäuse oder ein Objektivgehäuse ausbildet.

18. Optische Vorrichtung (50) gemäß einem der Ansprüche 15 bis 17, **dadurch gekennzeichnet, dass** das Vorsatzgerät (60) eine Optoelektronik (63) enthält, mit der optische Strahlen aus der Optik (52) visualisiert oder digital verarbeitet werden oder Daten, Informationen oder Grafiken optisch in den Strahlengang eingespeist werden.
